# EUROPEAN PATENT APPLICATION

(11) **EP 1 798 684 A1**
(43) Date of publication of application: **20.06.2007**
(21) Application number: 06025698.9
(22) Date of filing: 12.12.2006
(51) Int. Cl.: G06Q 40/00

(54) **Financial information analysis supporting method and system**

(30) Priority: 15.12.2005 JP 2005361924
(71) Applicant: HITACHI, LTD., Chiyoda-ku Tokyo 100-8280 (JP)
(72) Inventor: Yamagishi, Toshiyuki, Tokyo (JP); Sugita, Masaaki, Tokyo (JP); Fukuta, Kei, c/o Hitachi, Ltd., Tokyo 100-8220 (JP); Matsushita, Shoko, c/o Hitachi, Ltd., Tokyo 100-8220 (JP); Komiya, Fumio, c/o Hitachi, Ltd., Tokyo 100-8220 (JP)
(74) Representative: Strehl Schübel-Hopf & Partner

(57) **Abstract**

A financial information analysis supporting system supports analysis of financial information capable of effectively analyzing financial information described in the extended taxonomy and XBRL containing the extended taxonomy. The system includes a reference degree judgment system (100) for receiving XBRL data (101) and generating a reference degree for supporting analysis of the financial information described there. The reference degree judgment system (100) spreads accounting subject of the XBRL data in a tree, divides subjects into standard subjects (507) and extended subjects (508), and acquires a relative positional relationship for the each combination of a standard subject (507) and an extended subject (508) on the tree. A reference degree for the positional relationship is defined in advance and by using the definition, a reference degree is acquired from the acquired positional relationship, and a reference degree is displayed for each of the standard subject (507) and the extended subject (508).

## Description

### BACKGROUND OF THE INVENTION

The present invention relates to a financial information analysis supporting method and system and in particular, to a financial information analysis supporting method and system for analyzing and processing financial information in a system handling financial accounting data.

Recently, movement for standardization of the electronic format relating to financial/accounting data has become active. The XBRL (extensible Business Reporting Language) is a standard specification for describing financial information in the XML format. The XBRL is formed by a dictionary (taxonomy) describing accounting subject information and relationship between the subjects and data (instance) describing the financial information to be reported. The taxonomy can flexibly describe various information on the accounting subjects by using the XLink specification format. By describing such information in the taxonomy, only the minimum data can be described with a simple structure in the instance. Since the XBRL is a subset of the XML format specification of which is disclosed in http://www.xbrl.org/, any application based on the disclosed specification can interpret financial/accounting data.

The XBRL may be used firstly for disclosing the matters and standard accounting subjects to be reported according to the laws by an authority such as the tax processing center and the control authority (hereinafter, referred to as the reception side) as a taxonomy (hereinafter, referred to as the standard taxonomy). Moreover, when there arises a matter or an accounting subject which tax payers and reporters (hereinafter, referred as the creation side) cannot report or appropriately express by using the standard taxonomy, the taxonomy can be extended according to the XBRL specification (this taxonomy is called extended taxonomy) to add an accounting subject of the creation side, create an appropriate instance, and send the extended taxonomy and the instance to the reception side.

As the conventional technique concerning the method for analyzing financial information by using the standard accounting subject, for example, the technique disclosed in JP-A-2004-094894 is known. Moreover, the XBRL specification and the method defining the calculation expression using the XBRL data subject is disclosed in http://www.xbrl.org/.

### SUMMARY OF THE INVENTION

When delivering financial information by the XBRL, the reception side of the financial information can automatically perform the financial analysis and format check by setting a calculation expression and a check item in advance, thereby improving the business efficiency.

However, the reception side of the financial information cannot know the contents of the extended taxonomy created by the creation side and the instance associated with the extended taxonomy until it receives them and the reception side should personally check and judge what kind of affects are given by the contents to the calculation expression and the check items and how to correct the calculation expression and the check items.

A financial institution receives a large amount of financial information. Accordingly, the conventional technique for delivering financial information by the XBRL has a problem that contents of the extended taxonomy created by the creation side of the financial information and instances associated with the taxonomy should be checked and judged by persons. This deteriorates the work efficiency.

It is therefore an object of the present invention to provide a financial information analysis supporting method and system capable of effectively analyzing the financial information described in the XBRL including the extended taxonomy and instances associated with the extended taxonomy.

According to the present invention, the aforementioned object can be achieved by a financial information analysis supporting method using reference degree judgment means for judging reference degree between inputted financial information accounting subjects, the reference degree judgment means classifying financial information accounting subjects into standard subjects and extended subjects, spreading the relationship between the standard subjects and the extended subjects into a tree structure, and judging the association degree which is an affect degree between the both subjects as a reference degree from the relative positional relationship between the standard subjects and the extended subjects spread in the tree structure and displaying it on a client terminal.

That is, the present invention spreads accounting subjects in a tree, divides the respective subjects into standard subjects and extended subjects, acquires a relative positional relationship of each combination of a standard subject and an extended subject on the tree, acquires a reference degree from the acquired positional relationship by using a definition of the reference degree for the predefined positional relationship, and displays the reference degree for each of the standard subjects and the extended subjects on a client terminal. Moreover, the present invention stores the combination of the subjects serving as a reference when correcting the calculation expression, adjusts the reference degree from the use ratio of the combination, and displays the reference degree for each of the standard subjects and the extended subjects after the adjustment on the client terminal.

According to the present invention, a user can easily recognize an extended subject affecting the calculation expression and can effectively perform the financial information analysis.

Other objects, features and advantages of the invention will become apparent from the following description of the embodiments of the invention taken in conjunction with the accompanying drawings.

### BRIEF DESCRIPTION OF THE DRAWINGS

Fig. 1 is a block diagram showing a functional configuration of a financial information analysis supporting system according to a first embodiment of the present invention.
Fig. 2A and Fig. 2B explain an XBRL model.
Fig. 3 explains a reference degree judgment table for judging the reference degree for each of relationships between accounting subjects.
Fig. 4 explains configuration of a display color management table for managing display colors on the screen according to the reference degree.
Fig. 5A and Fig. 5B explain configuration of a standard subject management table for managing standard subjects and classification of subjects by the table.
Fig. 6 is a flowchart explaining a processing operation of a program executing inter-subject association management table setting.
Fig. 7 explains configuration of the inter-subject association management table for managing association between subjects.
Fig. 8 shows a tree showing a relative position between subjects with different colors given according to the reference degree.
Fig. 9 is a flowchart explaining a processing operation of a program of the reference degree judgment for judging the reference degree for a combination of the standard subject and an extended subject.
Fig. 10 shows display colors for each of the combinations of the standard subject and an extended subject obtained by the processing explained in Fig. 9 according to the reference degree.
Fig. 11 is a flowchart explaining the processing operation of the extended subject reference degree judgment program for judging the reference degree of each extended subject.
Fig. 12 shows display colors as an allocation table according to the reference degree of each extended subject obtained by the processing explained in Fig. 11.
Fig. 13 is a block diagram showing functional configuration of a financial information analysis supporting system according to a second embodiment of the present invention.
Fig. 14 is a table showing a configuration example of a knowledge table for managing knowledge.
Fig. 15 is a flowchart explaining the processing operation of a knowledge table update program for updating the knowledge table.
Fig. 16 shows configuration of a knowledge judgment table.
Fig. 17 is a flowchart explaining the processing operation of the knowledge reference degree processing program for judging the knowledge reference degree.
Fig. 18 is a schematic diagram showing an example of a screen displayed to a client in the first or the second embodiment of the present invention.
Fig. 19 is a block diagram showing a hardware configuration of the reference degree judgment system.
Fig. 20 shows a configuration example of a job type calculation expression management table.

### DESCRIPTION OF THE EMBODIMENTS

Description will now be directed to a financial information analysis supporting method and system according to embodiments of the present invention with reference to the attached drawings.

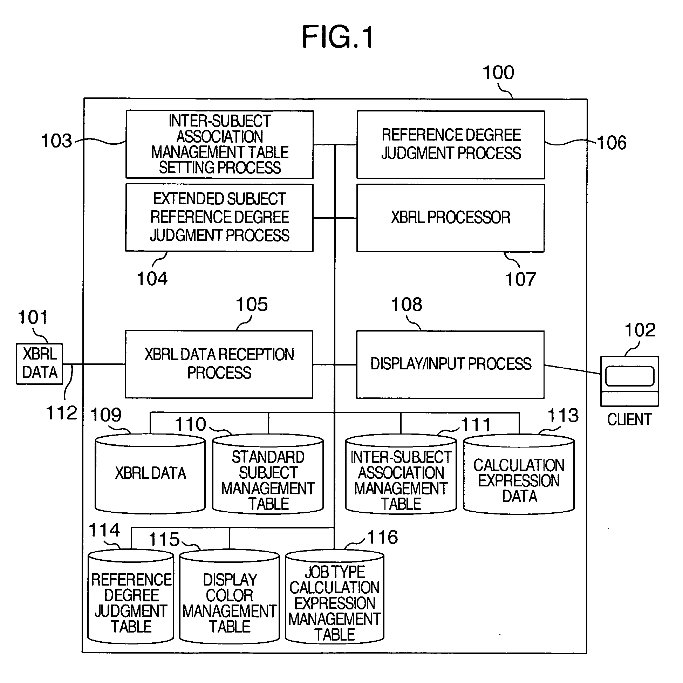

Fig. 1 is a block diagram showing a functional configuration of a financial information analysis supporting system according to a first embodiment of the present invention. The system in Fig. 1 includes a reference degree judgment system 100, XBRL data 101 received from out of the system, a client terminal 102, an inter-subject association management table setting program 103, extended subject reference degree judgment program 104, an XBRL data reception processing program 105, a reference degree judgment program 106, an XBRL processor 107, a display/input processing program 108, a file 109 for storing XBRL data to be processed, a standard subject management table 110, an inter-subject association management table 111, a network 112, a calculation expression data file 113, a reference degree judgment table 114, a display color management table 115, and a job type calculation expression management table 116.

The financial information analysis supporting system according to the first embodiment of the present invention includes a reference degree judgment system 100 for receiving XBRL data 101 from outside the system and creating reference degree for supporting analysis of the financial information described there and a client 102 used by a worker or the like.

As shown in Fig. 1, the reference degree judgment system 100 includes an inter-subject association management table setting program 103, an extended subject reference degree judgment program 104, an XBRL data reception program 105, a reference degree judgment program 106, an XBRL processor 107, a display/input processing program 108, an XBRL data file 109, a calculation expression data file 113, and various management tables.

In the reference degree judgment system 100 having the aforementioned configuration, the XBRL data reception program 105 receives XBRL data which has been transmitted from an external system via a network 112 and stores it in the XBRL data file 109. The reference degree judgment system 100 reads the calculation expression to be processed from the calculation expression data file 113 and reads XBRL data to be processed from the XBRL data file 109. After this, the reference degree judgment system 100 starts the XBRL processor 107 and spreads the XBRL data which has bee read in as a tree by interpreting it as XBRL.

Moreover, the reference degree judgment system 100 starts the inter-subject association management table setting program 103 and updates the inter-subject association management table 111 from the XBRL data which has been spread. Furthermore, the reference degree judgment system 100 starts the reference degree judgment process 106 or the extended subject reference degree judgment process 104, starts the display/input processing program 108, and displays the processing result of the reference degree judgment program 106 or the extended subject reference judgment program 104 at the client 102.

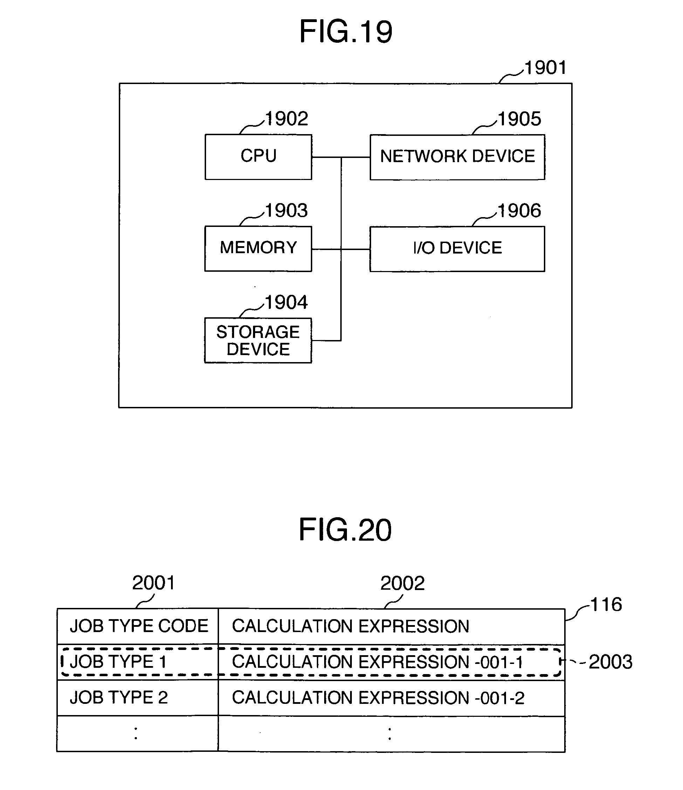

Hardware configuration of the reference degree judgment system 100 will be detailed with reference to Fig. 19 later. As shown in Fig. 19, the reference degree judgment system 100 is configured on a computer including a CPU 1902, a memory 1903, a storage device 1904, a network device 1905, and I/O device 1906. Programs, data, and tables are stored in the storage device 1904 and these information items are read into the memory 1903 when required. The CPU 1902 executes the programs so that the function as the system is carried out. Moreover, communication with outside is executed by the network device 1905. Output of the processed result and input of information through key operation by the user are performed by using the I/O device 1906 and processed by the display/input processing program 108 in the reference degree judgment system 100.

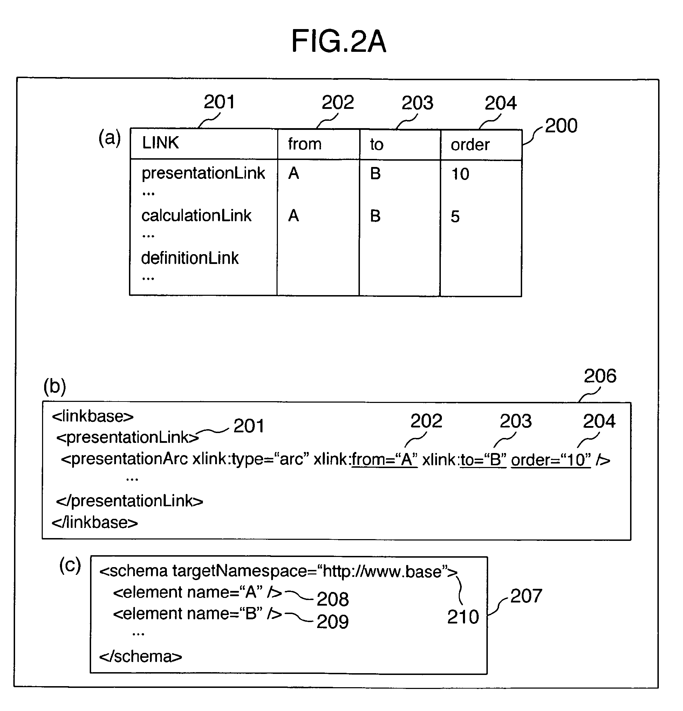

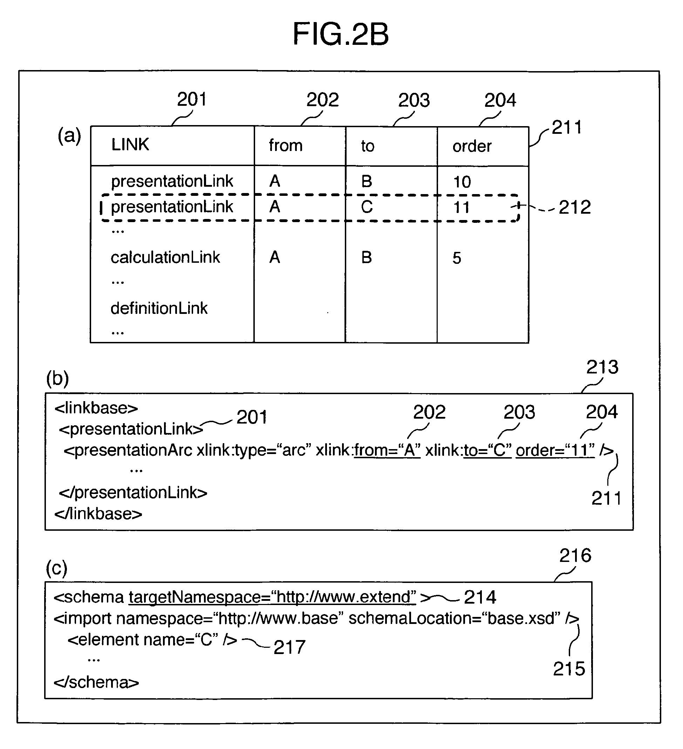

Next, explanation will be given on the process operations in the system shown in Fig. 1 with reference to the flowcharts, table layouts, and images shown in Fig. 2 to Fig. 12.

Fig. 2A and Fig. 2B explain an XBRL model. It should be noted that since the XBRL specification is described in http://www.xbrl.org/, explanations of details of the XBRL and the XML on which the XBRL is based are omitted here.

Firstly, referring to Fig. 2A, explanation will be given on the basis structure of the XBRL data. The taxonomy of the XBRL is formed by an XML schema file 207 as shown in Fig. 2A(c) and an XLink file 206 as shown in Fig. 2A(b). Accounting subjects are managed as element names of the XML schema file 207. In Fig. 2A, the element name A208 and the element name B209 are assumed to be identical to the accounting subject A208 and the accounting subject B209, respectively. Moreover, the name space where these elements exist is defined by 210. The relationship between the accounting subjects is managed by the XLink file 206.

Link types are managed by the link element 201 and its element names may be presentationLink, calculationLink, definitionLink, and the like. For each of the link types, an element Arc such as presentationArc, calculationArc, and definitionArc exist. A from-attribute and a to-attribute exist and relationship having directivity by these attributes is managed. Table 200 shown in Fig. 2A(a) expresses the link 201, the from-attribute 202, and the to-attribute 203 as a table. Synthesis is executed for each link 201 so that "from" 202 and "to" 203 coincide, thereby constituting a tree of the accounting subjects. Moreover, the presentationArc has an "order" attribute, which is also managed by the table 200. The "order" 204 is used to control the display order according to the "order" when a plurality of "to" 203 exist for a "from" 204. Thus, the XBRL data can be expressed by a tree for each link by interpreting the taxonomy.

Next, referring to Fig. 2B, explanation will be given on an extended subject of the XBRL data. Corresponding to the XML schema file 207 and the XLink file 206 explained in Fig. 2A, the extended subject uses the XML schema file 216 as shown in Fig. 2B(c) and XLink file 213 as shown in Fig. 2B(b). The name space of the element to be extended is defined as shown in 214. Moreover, the name space of the extension origin is specified as shown in 215. The extended subject is defined as shown in 217. The relationship between the extended subject defined in 217 and the subject of extension origin is defined by the XLink file 213 shown in Fig. 2B(b). The file structure is identical to the XLink file 206 shown in Fig. 2A. By using the extended subject by the "from" attribute and "to" attribute of Arc, it is possible to express the relationship between the extended subjects and the subject of the extension origin in a tree. For example, a record 212 in the table 211 shown in Fig. 2B(a) contains portions indicated by 201, 202, 203, and 204 in the XLink file 213 correlated to the columns 201, 202, 203, and 204 in the table 211.

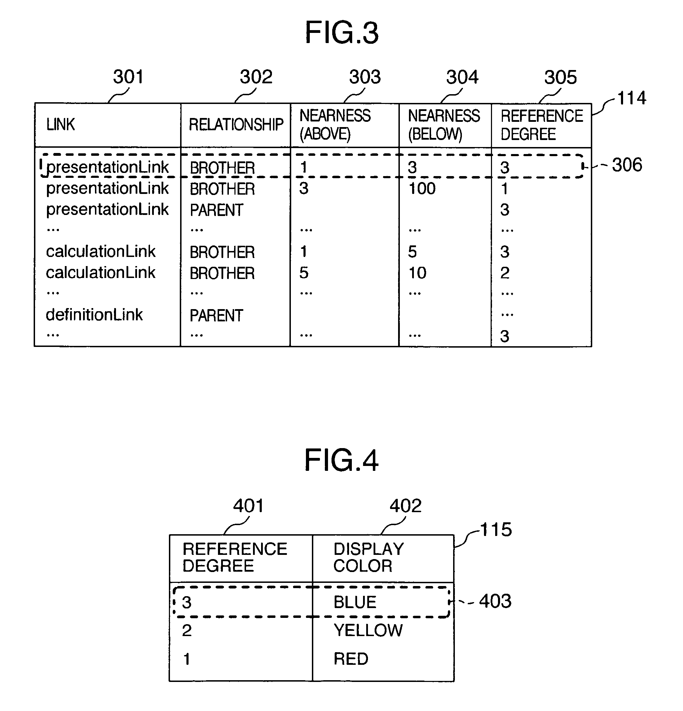

Fig. 3 explains configuration of the reference degree judgment table 114 for judging the reference degree for each of the relationship between the accounting subjects. In the embodiment of the present invention, the relationships between subjects around a certain subject as a center are expressed as a parent, a child, a brother, and the like. Since the XBRL handles financial information, when the relative position of each link on the tree is brother, the nearness affects the reference degree. For this, as shown in Fig. 3, the reference degree judgment table 114 for managing them separately has a link 301, a relationship 302, nearness (above) 303, nearness (below) 304, and a reference degree 305 as columns. In the table shown in Fig. 3, a record 306 is in the relationship of brother in presentationLink and the reference degree is 3 if the nearness is equal to or above 1 and below 3.

Fig. 4 explains configuration of a display color management table 115 for managing the display colors on the screen according to the reference degree. The display color management table 115 has a reference degree 401 and a display color 402 as columns. The record 403 in this table indicates that the display color is blue when the reference degree is 3.

As is known from the examples of Fig. 3 and Fig. 4, in this embodiment of the present invention, the reference degree is divided into 1 to 3 steps. However, the reference degree may be divided into a greater number of steps.

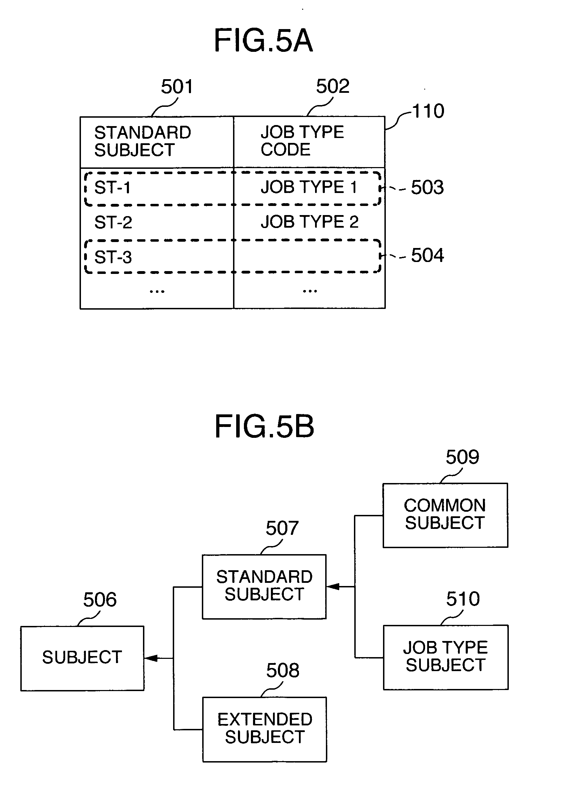

Fig. 5A and Fig. 5B explain configuration of a standard subject management table 110 for managing a standard subject and classification of subjects by the table.

As shown in Fig. 5A, the standard subject management table 110 for managing the standard subject has a standard subject 501 and a job type code 502 as columns. The subjects existing in the standard subject 501 are standard subjects and the other subjects are judged to be extended subjects. Moreover, the job type code 502 is judged in such a way that if a value exists, the subject is a standard subject unique to the job type (hereinafter, referred to as a job type subject) and if no value exists, the subject is a common standard subject not depending on the job type (hereinafter, referred to as a common subject). The record 503 in the table indicates that ST-1 is a standard subject and the job type of ST-1 is job type 1. Accordingly, ST-1 is a type of job type subject. Moreover, the record 504 indicates that ST-3 is a standard subject and the job code column is empty, i.e., ST-3 is a type of the common subject.

As shown in Fig. 5B, all the subjects 506 may be classified into standard subjects 507 or extended subjects 508. Moreover, the standard subjects may be classified into the common subjects 509 or the job type subjects 510. On the contrary, the common subjects 509 and the job type subjects 510 are a type of the standard subjects 507 while the standard subjects 507 and the extended subjects 508 are a type of subjects. Accordingly, the subject of the record 503 in Fig. 5A is a type of the job type subject 510 and the subject of the record 504 is a type of the common subject 509.

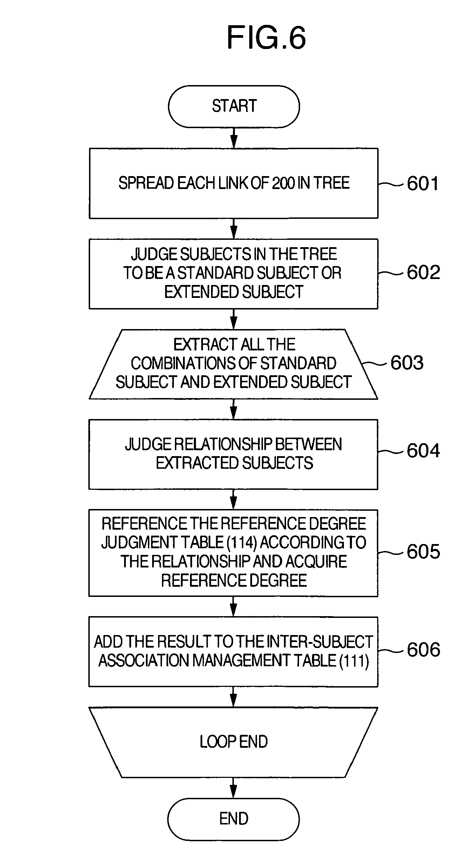

Fig. 6 is a flowchart explaining processing operation of the program executing the inter-subject association management table setting. Explanation will be given on the flowchart.
(1) Firstly, a tree is spread for each link by using the table 200 shown in Fig. 2A (a). The processing details are as has been explained with reference to Fig. 2 (step 601).
(2) Next, in each link, the standard subject management table 110 is referenced for each subject (assumed to be subject A) of the tree. If the subject A exists in the standard subject management table 110, the subject A is judged to be a standard subject. Otherwise, the subject A is judged to be an extended subject (step 602).
(3) All the combinations of the standard subject and the extended subject judged by the processing of step 602 are extracted and each of the combinations is subjected to steps 604 to 606 (step 603).
(4) For a pair of the standard subject and the extended subject specified by the processing of step 603, the relative positional relationship of the extended subject from the standard subject as the origin in the tree is judged by using a tree walk, for example. The judgment contents of the relative positional relationship may be various depending on the job use stage. For example, if the position is a parent node, the relationship is "a parent", and if the node is the parent node of the parent node or if the node is at the position where it is repeated, the relationship is "a direct line ancestor". If the node is a child node, the relationship is "a child". If the relationship is a child node of a child node or at the position where it is repeated, the relationship is "a descendent". If the relationship is at the position of the child node of the parent node other than yourself, the node is "a brother". If the relationship is at the position of a brother of a direct line ancestor or its descendent, the node is "brother/descendent of the direct line ancestor". If at the position of a descendent of a brother", the node is "a descendent of a brother". If the root is different, the node is "a stranger". Moreover, if the relationship is "a brother" and the link is presentationLink, the absolute value of the difference of the "order" attribute is judged to be the nearness (step 604).
(5) Next, the reference degree judgment table 114 is searched by using the link specified in step 601, the relationship judged in step 604, and the nearness judged in step 604 as keys so as to acquire the reference degree 305.
(6) Next, a pair of the standard subject and the extended subject specified in step 603, the link specified in step 601, the relationship and nearness judged in step 604, and the record associated with the reference degree 305 in step 605 are stored in the inter-subject association management table 111 (step 606)
(7) When the processing of steps 604 to 606 are completed for all the pairs of the standard subjects and the extended subjects extracted by the processing of step 603, the processing here is terminated.

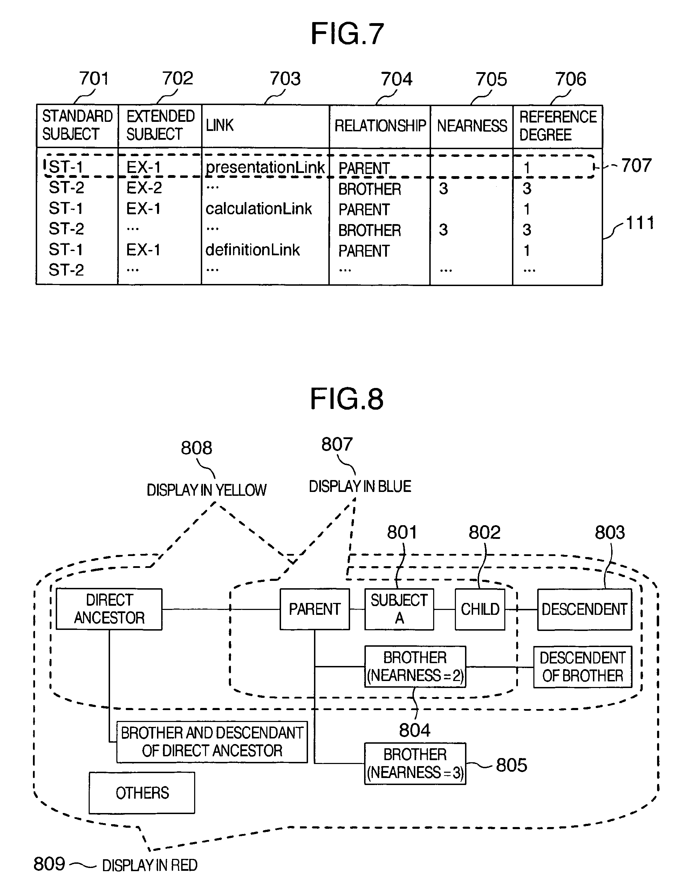

Fig. 7 explains configuration of the inter-subject association management table 111 for managing the association between the subjects. For the combination of a standard subject 701 and an extended subject 702, the inter-subject association management table 111 has a layout for managing reference degree 706 for the relationship 704 and the nearness 705 for each link 703. In the example of the record 707 in the table, the standard subject ST-1 is connected to the extended subject EX-1 by the presentationLink. According to the standard subject ST-1, the extended subject EX-1 is a parent and the reference degree in this case is 1.

Fig. 8 shows an example of relative position between the subjects shown by a tree and different display colors are given according to the reference degree. In this example, the relative position of another subject B viewed from a certain standard subject A801 is shown as a tree. When the another subject B is an extended subject, the reference degree 706 is extracted from the inter-subject association management table 111 and its display color is searched from the display color management table 115 and displayed on the tree. For example, a child 802 and brother (nearness = 2) 804 are displayed in blue 807 and a descendent 803 is displayed in yellow 808. Moreover, a brother (nearness = 3) 805 is displayed in red 809.

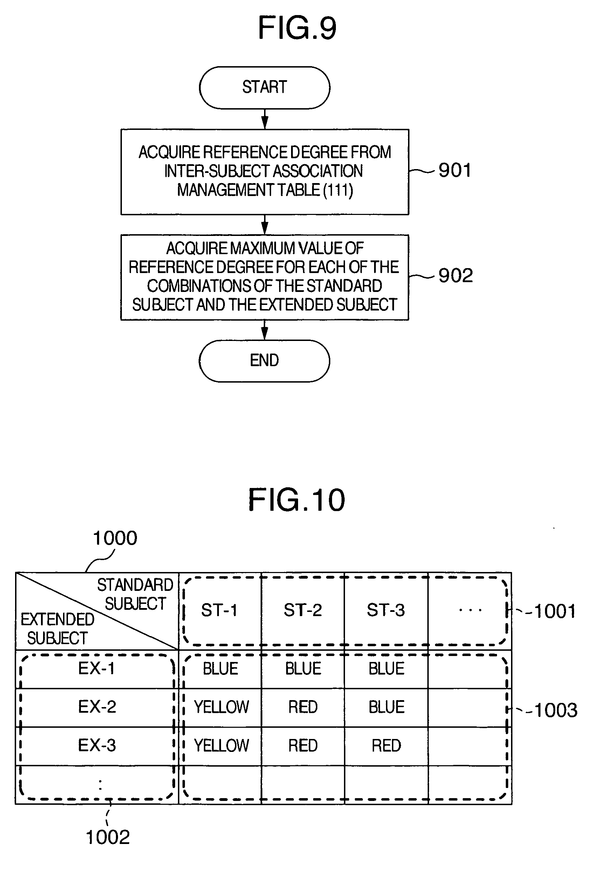

Fig. 9 is a flowchart explaining processing operation of the reference degree judgment program for judging the reference degree for the combination of a standard subject and an extended subject. Next, explanation will be given on the flowchart.
(1) Firstly, the standard subject 701, the extended subject 702, and the reference degree 706 are acquired from the inter-subject association management table 111 (step 901).
(2) Next, for the standard subject 701, the extended subject 702, and the reference degree 706 acquired in the process of step 901, maximum value of the reference degree 706 is acquired for each of the standard subject 701 and the extended subject. That is, the maximum value of the reference value 706 for the standard subject 701 and the extended subject 702 obtained here will be the reference degree for the standard subject 701 and the extended subject 702 (step 902).

Fig. 10 is a table showing display colors based on the reference degree of each combination of the standard subject and the extended subject obtained by the process explained with reference to Fig. 9. The table shown in Fig. 10 is a table 1000 formed by acquiring display colors 402 from the display color management table 115 by using, as a key, the reference degree of the standard subject 701 and the extended subject 702 obtained by the process explained with reference to Fig. 9. In this table, standard subjects 701 are arranged in 1001 and extended subjects 702 are arranged in 1002 and respective combinations are displayed by the display colors 402 in 1003. For example, the combination of the standard subject ST-1 and the extended subject EX-1 is displayed in blue.

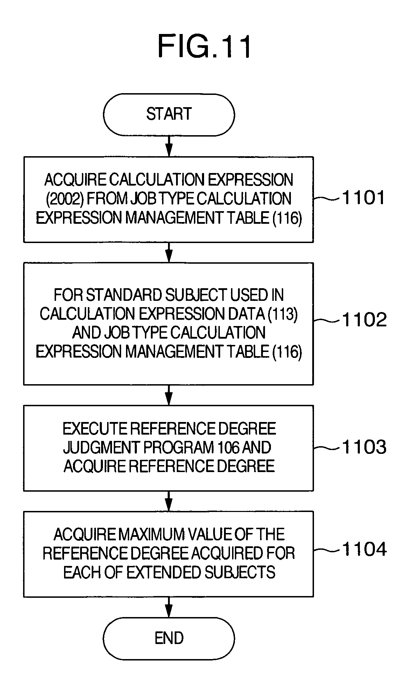

Fig. 11 is a flowchart explaining the processing operation of the extended subject reference degree judgment program for judging the reference degree for each of the extended subjects. Next, explanation will be given on this flowchart.
(1) Firstly, a calculation expression for the job type corresponding to the calculation expression data in the calculation expression data file 113 is acquired from the job type calculation expression management table 116. Here, the calculation expression data and the description rule of the calculation expression 2002 shown in Fig. 20 are such that the right side is a calculation expression for substituting a value in a variable and the left side is the calculation result. Firstly, using all the subjects contained in the XBRL data to be processed in the XBRL data file 109 as a key, the standard subject management table 110 is searched to acquire the job type code 502. Next, a record having the job type code 2001 corresponding to the calculation expression shown in Fig. 20 which coincides with the job type code 502 and the left side of the calculation expression data which coincides with the left side of the calculation expression 2002 is searched from the job type calculation expression management table 116 and the calculation expression 2002 of the relevant record is acquired (step 1101).
(2) A setting is made to successively execute the processes of steps 1103 and 1104 for the standard subjects used in the calculation expression data and the standard subjects used in the calculation expression 2002 acquired in step 1101 (step 1102).
(3) For the standard subjects specified by the process of step 1102, the reference degree judgment program 106 explained with reference to the flowchart of Fig. 9 is executed to acquire the standard subject 701, the extended subject 702, and the reference degree 706 (step 1103).
(4) For the standard subject 701, the extended subject 702, and the reference degree 706 obtained in step 1103, the maximum value of the reference degree 706 is acquired for each of the extended subject 702. The maximum value of the reference degree 706 of each extended subject 702 will be the reference degree of each extended subject 702 (step 1104).

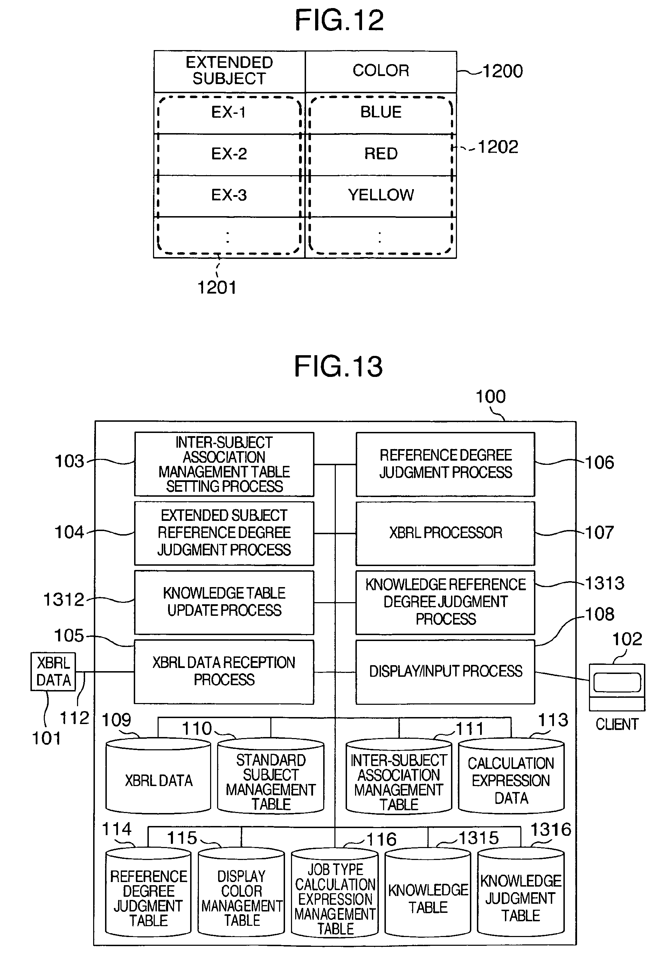

Fig. 12 is a table in which display colors are allocated according to the reference degree for each of the extended subjects 702 obtained by the process explained with reference to Fig. 11. The table 1200 is formed by acquiring the display colors 402 from the display color management table 115 by using, as the key, the reference degree of each extended subject 702 obtained by the process explained with reference to Fig. 11. In 1201, extended subjects are arranged, and the display colors 402 for the extended subjects 702 are displayed in 1202. For example, the extended subject EX-1 is displayed in blue.

As has been described above, the first embodiment of the present invention can display the judgment result of the reference degree by the aforementioned series of processes and can support financial information analysis by displaying an image as shown in Fig. 10 or Fig. 12 on the screen.

Fig. 13 shows a functional configuration of a financial information analysis supporting system according to a second embodiment of the present invention. In Fig. 13, 1312 denotes a knowledge table update program, 1313 denotes a knowledge reference degree judgment program, 1315 denotes a knowledge table, 1316 denotes a knowledge judgment table, and the other symbols denotes the same as in Fig. 1.

Like the first embodiment of the present invention explained with reference to Fig. 1, the financial information analysis supporting system according to the second embodiment of the present invention is formed by a reference degree judgment system 100 for receiving XBRL data 101 from outside the system and generating a reference degree for supporting analysis of the financial information described there and a client 102 used by a worker and the like.

As shown in Fig. 13, the reference degree judgment system 100 is formed by the configuration shown in Fig. 1 with addition of the knowledge table update program 1312, the knowledge reference degree judgment program 1313, the knowledge table 1315, and the knowledge judgment table 1316.

In the reference degree judgment system 100 having the aforementioned configuration, the reference degree judgment system 100 receives XBRL data 101 transmitted from outside an external system via the network 112 by the XBRL data reception program 105 and stores the XBRL data 101 of the embodiment in the XBRL data file 109. Moreover, the reference degree judgment system 100 reads a calculation expression to be processed from the calculation expression data file 113 and reads an XBRL data file to be processed from the XBRL data file 109. After this, the reference degree judgment system 100 starts the XBRL processor 107, interprets the read XBRL data as XBRL and spreads it in the tree.

Moreover, the reference degree judgment system 100 starts the inter-subject association management table setting program 103 and updates the inter-subject association management table 111 from the spread XBRL data. Furthermore, the reference degree judgment system 100 starts the reference degree judgment process 106 or the extended subject reference degree judgment process 104, starts the display/input processing program 108, and displays the processing result of the reference degree judgment program 106 or the extended subject reference degree judgment program 104 in the client 102.

The reference degree judgment system 100 receives the information which has been inputted from the client, by the display input process 108 and then starts the knowledge table update program 1312, stores the information received from the client in the knowledge table 1315, and updates the knowledge table 1315. The reference degree judgment system 100 starts the knowledge reference degree judgment program 1313 and transmits the result to the client 102 by the display/input process 108 for display.

A hardware configuration of the reference degree judgment system 100 will be detailed later. As shown in Fig. 19, the reference judgment system 100 is configured on a computer including a CPU 1902, a memory 1903, a storage device 1904, a network device 1905, and an I/O device 1906. Programs, data, and tables are stored in the storage device 1904 and these information items are read into the memory 1903 when required. The CPU 1902 executes the programs so as that a function as a system is executed. Moreover, communication with outside is executed by the network device 1905 and output of the processing result and input of information through key operation by the user are executed by using the I/O device 1906 and processed by the display/input program 108 in the reference degree judgment system 100.

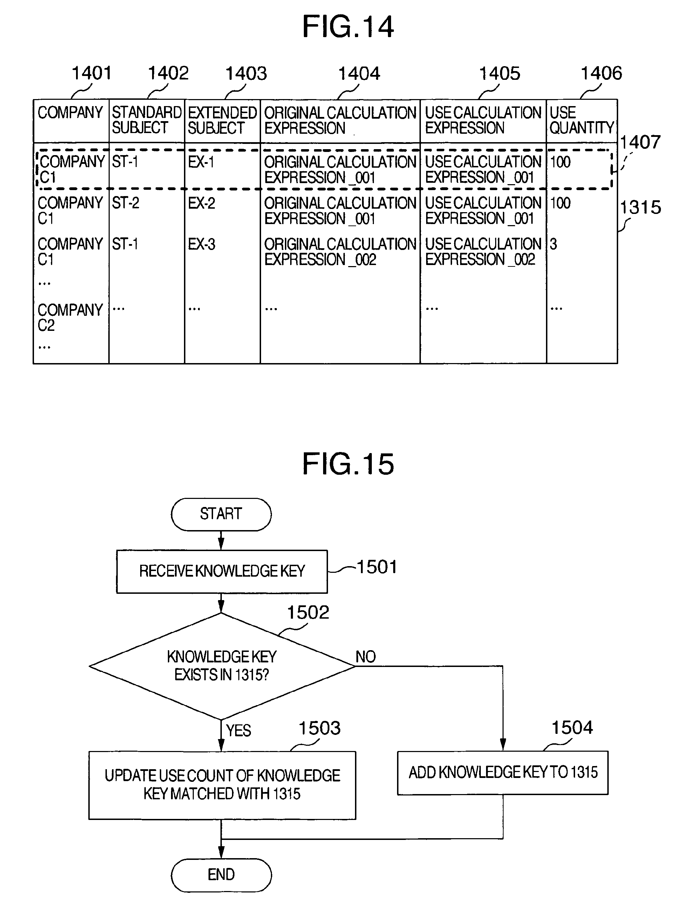

Next, explanation will be given on the processing operations in the system shown in Fig. 13 with reference to flowcharts, table layouts, and images shown in Fig. 14 to Fig. 17.

Fig. 14 shows a configuration example of the knowledge table 1315 for managing knowledge. In general, financial information is extended in each of the companies. However, when viewed in a company unit, it is often the case that the same extension is performed every year. For this, the knowledge table 1315 has columns of the company 1401, the standard subject 1402, the extended subject 1403, the original calculation expression 1404, and the use calculation expression 1405, for each of which the use count 1406 can be managed. The record 1407 in this table 1315 shows an example that in company C1, with combination of the standard subject ST-1 and the extended subject EX-1, for the original calculation expression -001, the use calculation expression-001 is used 100 times.

Fig. 15 is a flowchart explaining the processing operation of the knowledge table update program 1312 for updating the knowledge table. Next, explanation will be given on this flowchart.
(1) Firstly, a knowledge key is received. Here, the knowledge key is an item serving as a key of the knowledge table 1315. In the embodiment being explained, the company 1401, the standard subject 1402, the extended subject 1403, the original calculation expression 1404, and the use calculation expression 1405 are the keys. The company 1401 is information on the company contained in the XBRL data to be processed in the XBRL data file 109. The standard subject 1402 and the extended subject 1403 are the combination of the standard subject and the extended subject used as a reference when correcting the calculation expression by the user according to the images of the display colors explained in Fig. 10 and specified through the display/input process 108 by the user. The original calculation expression 1404 is specified from the calculation data file 113 and the use calculation expression 1405 is specified through the display/input process 108 by the user (step 1501).
(2) Search is made to decide whether the knowledge table 1315 contains a record which coincides with the knowledge key received in the process of step 1501. If yes, the use count 1406 of the existing record is updated and the processing here is terminated. The update may be, for example, an increment by one (steps 1502, 1503).
(3) If the knowledge table 1315 has no record which coincides with the knowledge key in the search of step 1502, the knowledge key is stored in the knowledge table 1315 to create a new record and the processing is terminated. Here, the use count 1406 of the record is 1 (step 1504).

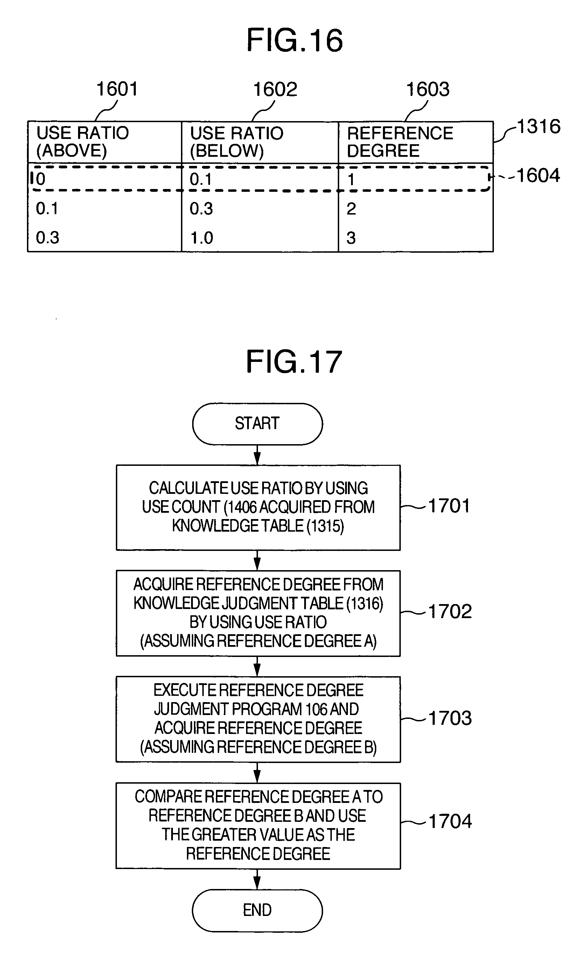

Fig. 16 shows a configuration of the knowledge judgment table 1316. The knowledge judgment table 1316 contains information for judging the reference degree of the standard subject 1402 and the extended subject 1403 by using the information accumulated in the knowledge table 1315 explained with reference to Fig. 14. In this embodiment of the present invention, the knowledge judgment table 1316 has a layout including a use ratio (equal to or above) 1601, a use ratio (below) 1602, and a reference degree 1603 so that judgment is made by paying attention on the use ratio which can be calculated from the use count 1406. In the example of record 1604 in this table, when the use ratio 1406 is equal to or above 0 and below 0.1, the reference degree is judged to be 1.

Fig. 17 is a flowchart explaining the processing operation of the knowledge reference degree judgment program 1313 for judging the knowledge reference degree. Next, explanation will be given on this flowchart. For the reference degree obtained in the process for judging the reference degree for the combination of the standard subject and the extended subject explained with reference to Fig. 9, a reference degree is synthesized by using the knowledge table 1315 and the knowledge judgment table 1316 so as to judge the combination of the standard subject and the extended subject of higher reference degree.
(1) Firstly, for the record narrowed by the company of the object XBRL data in the XBRL data file 109 of the knowledge table 1315, a use ratio is calculated for each of combinations of a standard subject and an extended subject. This process searches the knowledge table 1315 for the information on the company contained in the XBRL data and calculation expression data in the calculation expression data file 113 by using the company 1401 and the original calculation expression 1404 as keys, respectively, so as to acquire the standard subject 1402, the extended subject 1403, and the use count 1406, calculates the sum L of use counts 1406 of each of the standard subjects 1402 and the extended subjects 1403, calculates the total sum M of the use counts, and divides L by M so as to calculate the use ratio of each of the standard subjects 1402 and the extended subject 1403 (step 1701).
(2) Next, a reference degree is acquired by using each of the use ratios calculated in the process of step 1701. This process searches the knowledge judgment table 1316 by using the use ratios of the standard subjects 1402 and the extended subjects 1403 so as to acquire the reference degree 1603. Here, it is assumed that when a combination of a certain standard subject and an extended subject is (α), the reference degree is A (step 1702).
(3) The reference degree judgment program 106 for judging the reference degree for a combination of the standard subject and an extended subject explained with reference to Fig. 9 is executed for the aforementioned combination (α). The reference degree obtained by this process is assumed to be B (step 1703).
(4) The reference degree A and the reference degree B obtained in the aforementioned process are compared to each other and the greater value is made to be the reference degree of the combination (α) of the standard subject and the extended subject, thereby terminating the processing here (step 1704).

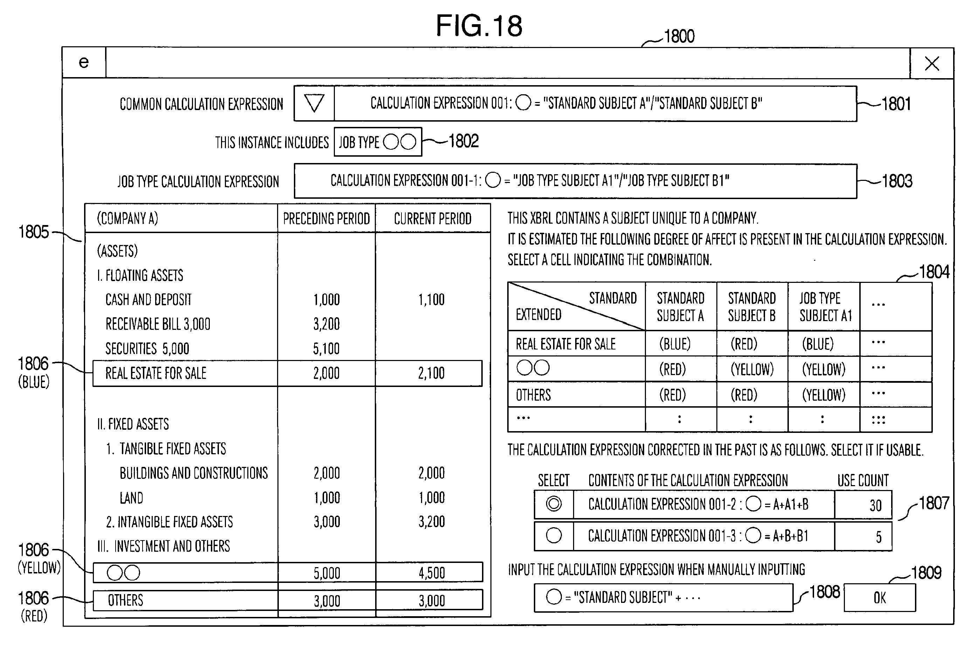

Fig. 18 schematically shows an example of the screen displayed on the client 102 in the first embodiment or the second embodiment of the present invention.

The example of the display screen 1800 includes a plurality of display areas. That is, in a display area 1801, calculation expression data 113 is displayed. In a display area 1802, the job type code contained in the XBRL data as an object in the XBRL data file 109 is displayed. In a display area 1803, the job type calculation expression which has been acquired in the process of step 1101 of the flowchart explained in Fig. 11 is displayed. A display area 1804 displays a table 1000 indicating display colors based on the reference degree explained with reference to Fig. 10 for the combination of the standard subject acquired in the process of step 1102 and the extended subject used in the XBRL data as an object. This table is used in the second embodiment of the present invention for inputting a combination of a standard subject and an extended subject by reporting that a cell in the displayed table has been selected by the user to the display/input process 108. A display area 1805 displays XBRL data to be an object. A display area 1806 displays a display color of the table 1200 indicating the display color of the reference degree for each of the extended subjects explained with reference to Fig. 12, in accordance with the contents of the display area 1805. A display area 1807 is used for the knowledge table 1315, i.e., displays totals of use counts for the respective use calculation expressions by using the company of the XBRL data as an object and the calculation expression of the display area 1801 as keys, the totals being sorted in the descending order. The display area 1807 has a selection button for directly using the data in this area. A display area 1808 is an area for inputting a calculation expression by the user when no calculation expression used in the past is appropriate.

If an OK button 1809 is pressed by the user after specifying the display area 1807 or 1808, the calculation expression described with specification of the user in the display area 1807 or 1808 is executed to the XBRL data as an object. The execution result is transmitted to the client 102 by the display/input process 108 and displayed. Thus, financial analysis is performed. Moreover, in the second embodiment of the present invention, the knowledge update program 1312 is executed.

Fig. 19 is a block diagram showing a hardware configuration of the reference degree judgment system 100. In Fig. 19, 1902 denotes a CPU, 1903 denotes a memory, 1904 denotes a storage device, 1905 denotes a network device, and 1906 denotes an I/O device.

The aforementioned functional configuration of the reference degree judgment system 100 is configured on a computer including a CPU 1902, a memory 1903, a storage device 1904, a network device 1905, and an I/O device 1906. Programs, data, and tables are stored in the storage device 1904 and these information items are read into the memory 1903 according to an instruction of the CPU 1902. The programs are processed in the CPU and the aforementioned various processes in the embodiment of the present invention are executed. Moreover, communication with outside is executed by the network device 1905. Display of the processed result and input of information through key operation by the user are executed by using the I/O device 1906.

Fig. 20 shows a configuration example of the job type calculation expression management table 116. The job type calculation expression management table 116 is used for utilizing the job type calculation expression for making judgment for the calculation expression data in the calculation expression data file 113 according to the XBRL data corresponding to the calculation expression data and is formed by the job type code 2001 and the calculation expression 2002 as columns. The calculation expression 2002 is derived from the calculation expression data 113 and the XBRL data as has been explained in the process of step 1101 of the flowchart in Fig. 11.

In the aforementioned embodiment of the present invention, the user can easily recognize the extended subject which affects the calculation expression. Moreover, a standard calculation expression for a particular job type or the job type subject used in the calculation expression is more helpful than a general calculation expression. In the embodiment of the present invention, even when a general calculation expression is selected as a calculation object, a job type calculation expression is searched and the accounting subject used in the calculation expression is also displayed. Accordingly, the user can easily recognize the extended subject which affects the calculation expression. Moreover, even when the reference degree of a combination is judged to be low from the positional relationship, by storing that the user has referenced the combination when correcting the calculation expression used for financial analysis or the like, the combination may be judged to have a high reference degree if the use ratio exceeds a certain use ratio. Thus, the user can easily recognize the extended subject affecting the calculation expression.

The present invention may be used by an enterprise, a supervisory authority, a financial institutional investor, or the like for analyzing and checking financial information so as to improve the job efficiency.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A financial information analysis supporting method using reference degree judgment means (100) for judging reference degree between inputted financial information accounting subjects, the reference degree judgment means (100) executes the following steps of:
classifying financial information accounting subjects into standard subjects and extended subjects;
spreading the relationship between the standard subjects (507) and the extended subjects (508) into a tree structure; and
judging the association degree which is an affect degree between the both subjects as a reference degree from the relative positional relationship between the standard subjects (507) and the extended subjects (508) spread in the tree structure and displaying it on a client terminal (102).

2. The financial information analysis supporting method as claimed in claim 1, wherein the association between the standard subjects (507) and the extended subjects (508) is such that the standard subjects (507) judge the reference degree for each of the extended subjects (508) only for standard subjects (507) used in calculation expressions.

3. The financial information analysis supporting method as claimed in claim 1, wherein
a first table associating the standard subjects with job types and a second table associating the job types with the calculation expressions are used as an association between the standard subjects (507) and the extended subjects (508),
a job type is identified from the standard subjects contained in the financial data as an object by using the first table,
a second calculation expression for the job type is identified from the first calculation expression as an object and the identified job type by using the second table, and
a reference degree is judged for each of the extended subjects (508) only for the standard subjects used in the second calculation expression and the standard subjects (507) used in the second calculation expression.

4. The financial information analysis supporting method as claimed in claim 1, wherein when a user corrects a calculation expression formed by the standard subjects (507) and corrects the reference degree by referencing the reference degree between the standard subjects (507) and the extended subjects (508), the calculation expression before the correction, the calculation expression after the correction, the combination of the standard subject (701) and the extended subject (508) which has been referenced are stored or when the calculation expression before the correction, the calculation expression after the correction, and the combination of the standard subject (507) and the extended subject (508) which has been referenced are already stored, the use count is updated, frequency is acquired from the use count, a second reference degree different from the aforementioned reference degree is acquired from the frequency, and the aforementioned reference and the second reference are considered to judge a new reference degree.

5. The financial information analysis supporting method as claimed in claim 1, wherein the reference degree is displayed in different display colors according to the value of the reference degree on the client terminal (102).

6. A financial information analysis supporting system comprising reference degree judgment means (100) for judging a reference degree between inputted financial information accounting subjects and a client terminal (102), wherein
the reference degree judgment means (100) divides the financial information accounting subjects into standard subjects (507) and extended subjects (508), spreads the association between the standard subjects (507) and the extended subjects (508) in a tree structure, judges the association degree which is an affect degree between the both subjects as a reference degree from the relative positional relationship between the standard subjects (507) and the extended subjects (508), and displays it on the client terminal (102).

7. The financial information analysis supporting system as claimed in claim 6, wherein as the association between the standard subjects (507) and the extended subjects (508), the standard subjects (507) handles only the standard subjects (507) used in the calculation expression in analysis of the financial information as an object and judges a reference degree for each of the extended subjects (508).

8. The financial information analysis supporting system as claimed in claim 6, wherein as the association between the standard subjects (507) and the extended subjects (508), a first table for associating the standard subjects (507) with the job type and a second table associating the job type with the calculation expression are used, so that a job type is identified from the standard subjects contained in the financial data as an object by using the first table, a second calculation expression for the job type is identified from a first calculation expression as an object and the identified job type by using the second table, and a reference degree of only the standard subjects (507) used in the second calculation expression and the standard subjects (507) used in the second calculation expression is judged for each of the extended subjects (508).

9. The financial information analysis supporting system as claimed in claim 6, wherein when a user corrects the reference degree by correcting a calculation expression constituted by a standard subject (507) and considering the reference degree between the standard subject (507) and the extended subject (508), the calculation expression before the correction, the calculation expression after the correction, and the combination of the referenced standard subject and the extended subject are stored or if the calculation expression before the correction, the calculation expression after the correction, and the combination of the referenced standard subject and the extended subject are already stored, the use count stored is updated, a frequency is obtained from the use count, a second reference degree is obtained from the frequency which is different from the aforementioned reference degree, and the aforementioned reference degree and the second reference degree are taken into consideration to judge a new reference degree.

10. The financial information analysis supporting system as claimed in claim 6, wherein display is performed by different display colors on the client terminal according to the value of the reference degree.
